# EUROPEAN PATENT SPECIFICATION

(11) **EP 3 596 790 B1**
(45) Date of publication and mention of the grant of the patent: **11.01.2023**
(21) Application number: 18711879.9
(22) Date of filing: 13.03.2018
(51) Int. Cl.: H02G 3/22, H01R 13/523

(54) **ELECTRICAL PENETRATOR ASSEMBLY**
ELEKTRISCHE PENETRATORBAUGRUPPE
ENSEMBLE PÉNÉTRATEUR ÉLECTRIQUE

(30) Priority: 17.03.2017 NO 20170404
(43) Date of publication of application: 22.01.2020
(73) Proprietor: Vetco Gray Scandinavia AS, 1338 Sandvika (NO)
(72) Inventor: RAAD, Erik, 0874 NO Oslo (NO); ELNAN-KUNTSEN, Jan Erik, 0478 NO Oslo (NO)
(74) Representative: Novagraaf Group
(86) International application number: PCT/EP2018/056214
(87) International publication number: WO 2018/167048

(56) References cited:
- EP-A1- 2 377 205
- EP-A1- 2 908 396
- WO-A1-2014/137581
- US-B2- 8 303 312

## Description

### TECHNICAL FIELD OF THE INVENTION

The present invention relates to a penetrator assembly arranged for conducting electrical power to an electrical appliance that is shielded from the external environment by means of a housing or vessel creating a fluid and pressure barrier around the apparatus.

### BACKGROUND AND PRIOR ART

EP 2 377 205 A1 discloses a high voltage subsea electrical penetrator.

In subsea applications, e.g., pump or compressor motors, switchgear, transformers and other electrical appliances may be supplied electrical power via an opening in a wall of a housing that protects the inboard apparatuses from water outside the housing. The housing is typically filled with fluid, gas or oil, for electrically insulating and/or cooling purposes. At water depth down to 1,000 m and beyond, and at production pressure of 100-300 bar or more, the pressure difference over the housing wall may be considerable. Devices for conducting electrical power through the housing wall can thus be subjected to considerable axial forces resulting from the pressure difference between the surrounding sea and the fluid filled housing.

In the field of oil technology, the devices used for conducting electrical power to inboard electrical appliances subsea, topside or on land are referred to as electrical penetrators or just penetrators. The penetrator comprises, briefly, a conductor which is anchored in an insulator body which in turn is fixated in a housing that can be coupled to the apparatus housing, in use forming a part of the fluid/ pressure barrier that protects the electrical appliance. Traditional penetrator design relies on the shear strength of the insulation material and its ability to resist forces such as the hydrostatic force applied to the insulator body in axial direction. US 7614894 B2 and US 8097810 B2 are examples of this design principle.

For example, US 8287295 B2 discloses a glass-ceramic penetrator assembly which relies on the bonding between the conductor, the glass insulation and the housing to provide a pressure barrier.

The penetrator designs hitherto available for high power and >10 kPSI applications rely on a single conductor inside an insulating body. This is due to the fact that axially loaded insulation material benefits/requires a small cross section in order to handle the forces during high differential pressure loading.

### SUMMARY OF THE INVENTION

The present invention is defined in the accompanying claims.

According to claim 1 of the present invention, an electrical penetrator assembly which isolates the insulator body from axial forces resulting from the differential pressure acting on the penetrator is provided.

It is another object of the present invention to provide an electrical penetrator assembly that permits the use of existing insulation materials at higher pressure ratings than what they are normally rated for.

It is still another object of the present invention to provide an electrical penetrator assembly which is scalable to include multiple conductors in a single penetrator housing.

The electrical penetrator assembly according to claim 1 comprises: a penetrator housing, at least one conductor capable of conducting electrical power, extending from a first end of the penetrator housing, an insulator body surrounding the conductor, wherein the conductor passes through the insulator body from an axially facing opening in a first end of the insulator body to a laterally facing opening in the side of the insulator body, the laterally facing opening located in a section of the insulator body delimited by seal systems towards the penetrator housing on each side of the lateral opening.

By arranging the conductor, insulator body and seals of the assembly as claimed, the area engaged by pressure is defined between the seals such that resulting forces are restricted to act radially in compression only, thus reducing or omitting the shear forces otherwise acting on the insulator body in penetrators of previous design.

Rigid insulation materials have mechanical strength in compression which is in the range of 2.5 to 20 times better than the shear or tension strength limit. Conventional insulation materials, such as epoxy or ceramics, can thus be utilized at higher pressure ratings.

Another advantage is that the construction is less sensitive to increased diameter as compared to penetrators which are dominated by axial stress loadings, and thus a higher number of conductors per penetrator assembly can be achieved.

This advantage can be utilized in an insulator body comprising a plurality of conductors which are arranged, preferably in concentric relation, about a longitudinal axis of the insulator body. This first embodiment can be realized by moulding the insulator body about a plurality of conductors, each formed with an axial conductor member adjoining a radial conductor member. In some embodiments of the penetrator assembly, the insulator body is moulded about the at least one conductor being formed with an axial conductor member adjoining a radial conductor member.

The electrical penetrator assembly according to claim 1 further comprises an open passage through the insulator body to connect a first end face of the insulator body with a second end face of the insulator body, the open passage being arranged to lead internal pressure to the second end face. This through passage leads pressure to the opposite end of the insulator body, whereby pressure is equalized and the axial forces balanced and can be disregarded.

Thereby, a plurality of conductors of the penetrator assembly can be arranged about a longitudinal axis of the insulator body.

These embodiments of the penetrator assembly can utilize an insulator body in moulded epoxy, or made of other thermosetting resin with corresponding properties.

A further embodiment of the penetrator assembly comprises an insulator body having an axial bore for an axial conductor member, the axial bore intersected by a radial bore for a radial conductor member which is connectable to an inner end of the axial conductor member inside the insulator body. In other words, an axial bore passes through the insulator body with a bore diameter that provides clearance about the axial conductor member when seated in the bore of the penetrator assembly.

This embodiment foresees the use of a preformed insulator body made in ceramic material.

In order to equalize pressure and thus balancing axial forces acting on the insulator body, the axial bore is made to pass through the insulator body with a bore diameter that provides clearance about the axial conductor member when seated in the bore.

In order to confine the pressure between seals, and thus restricting the engagement of forces to act radially towards the outside of the insulator body only, the radial conductor member is preferably brazed to the outside of the insulator body between the seals.

In some embodiments, the insulator body of the penetrator assembly comprises an axial bore for an axial conductor member, the axial bore being intersected by a radial bore for a radial conductor member which is connectable to an inner end of the axial conductor member inside the insulator body.

In most applications, the radial conductor member can be arranged to connect to the axial member under right angles, which reduces the overall length of the penetrator. A connecting angle other than 90° may be more appropriate in other applications. A radial conductor member which is angled to point at from about 45° to about 90° from the direction of the axial conductor member should meet all reasonable needs.

In some embodiments, the radial conductor member is angled from the axial conductor member to point at from about 60° to about 90° from the direction of the axial conductor member.

In a further embodiment, the conductor comprises an axial conductor member and a radial conductor member which adjoins the axial conductor member, preferably under right angles or mainly right angles, and wherein the axial conductor member further comprises an axial through bore. As in the other embodiments, the axial through bore is operative for equalizing pressure and thus effects balancing of axial forces.

This further embodiment of the penetrator assembly comprises a tubular insulator body and being provided with seal systems. An outer seal assembly is arranged for sealing between the insulator body and the penetrator housing, and an inner seal assembly is arranged for sealing between the insulator body and the axial conductor member, wherein the outer and inner seal assemblies are arranged on each side of the radial conductor member.

The insulator body can be a ceramic element, a ceramic sleeve, or made by moulded epoxy.

In all embodiments, the second end of the insulator body is accommodated in a seat formed in the penetrator housing. As used here, "seat" means a bore with a closed end adapted for insertion and accommodation of the insulator body from the open end of the bore. The embodiment avoids the need for special shaping to secure the insulator body and conductors in the penetrator housing, and thus simplifies manufacture and assembly.

An insulator disc can be arranged in the seat of the penetrator assembly.

The penetrator assembly of the present invention provides a compact design that reduces weight, size and cost impact, which can be of special importance in connection with, e.g., rotating machinery which can include multiple individual loads and power needs. Furthermore, the number of penetrations through a pressure housing should be limited as it drives an increase in wall thickness. Hence, a limited number of penetrations of the housing wall is beneficial to the mechanical capacity of the unit.

### SHORT DESCRIPTION OF THE DRAWINGS

Embodiments of the invention will be further explained below with reference made to the accompanying drawings. In the drawings,
Figs. 1a and 1b arecross sectional views of a first embodiment of the penetrator,
Figs. 2a and 2b are cross sectional views of a second embodiment of the penetrator,
Figs. 3a and 3b are cross sectional views of a third embodiment of the penetrator, and
Figs. 4a and 4b are cross sectional views of a fourth embodiment of the penetrator.

### DETAILED DESCRIPTION OF PREFERRED EMBODIMENTS

Although the invention is disclosed basically in connection with subsea applications wherein the "external environment" indicates water, it shall be noted that the subject penetrator assembly may also find use in land-based applications wherein the external environment can be subsoil water or even air/gas.

It shall be noted initially that the differential pressure over the penetrator assembly arises from the difference between the pressure inside the housing for the electrical appliance and the pressure outside the housing. In subsea applications, obviously, the outside pressure depends on the water depth. However, the outside pressure need not always be the higher pressure as the inboard electrical appliance can also be housed in a pressure vessel that is pressurized to a higher pressure than the outside environment. From the following description of embodiments, it should also be noted that only the inboard pressure is allowed to apply axial stress on the insulator whereas the outside pressure is redirected to act radially in compression only. This way the insulator is completely relieved from shear stress.

In the drawings, each embodiment is illustrated with its respective insulator shown separately. Throughout the description and drawings, like elements are defined by the same reference number.

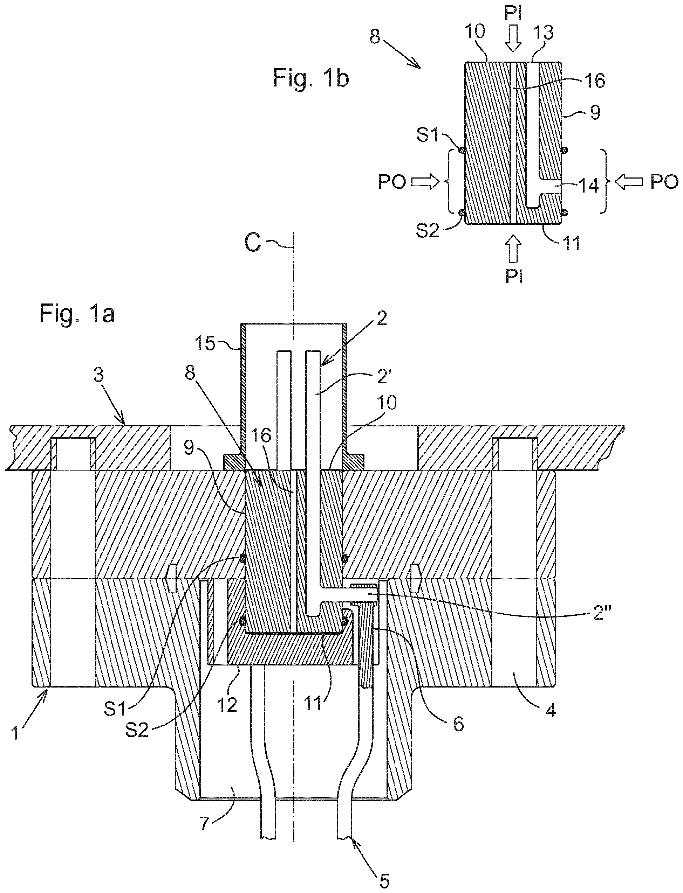

Thus, with reference to Figs. 1a and 1b the electrical penetrator assembly according to claim 1 comprises a penetrator housing 1 in which one or more conductors 2 extend in a first direction for connecting with an electrical appliance (not shown) inside a housing 3. The penetrator housing 1 of the shown embodiment is a rotation symmetric assembly, in the art also referred to as a flange, with holes 4 for bolting the penetrator 1 to the wall of the housing 3. In mounted position, the penetrator assembly forms a part of the barrier that separates the inside environment from the outside environment, e.g. having different pressures or fluid content.

The conductor 2, capable of conducting electrical power extending from a first end of the penetrator housing, is made in a conductive material such as cupper or aluminium e.g., and is dimensioned for conducting electrical power at high ratings (high voltage, high current) to the electrical appliance inside the housing 3. Electrical power is supplied to the penetrator assembly via power cables 5, contacting the conductors 2 inside the penetrator housing by means of suitable connection adapters 6. The power supply cables are received in the second end of the penetrator housing 1 within a collar 7.

The conductor 2 passes through an insulator body 8 which isolates electrically the conductor from the penetrator housing. Although the insulator can have other shapes, the insulator 8 of the illustrated embodiment is a body with a cylindrical periphery or side face 9 which extends axially from a first end face 10 to a second end face 11. The second end face 11 is received and accommodated in a seat 12 arranged in the penetrator housing, within the collar 7.

Within the insulator body 8, the conductor 2 passes from an axially facing opening 13 in the first end face of the insulator body, to a laterally facing opening 14 in the side face 9 of the insulator body. Consequently, the conductor 2 includes an axial conductor member 2' adjoining a radial conductor member 2".

The axial conductor member 2' extends from the penetrator housing in the first direction within a pipe socket 15, in use penetrating the wall of the apparatus housing 3.

The radial conductor member 2" extends from the laterally facing opening 14 in a section of the insulator body which is delimited by first and second seal systems S1 and S2 respectively. The sealing systems S1, S2 are spaced axially for sealing against the penetrator housing on each side of the lateral opening 14.

In consequence, the external pressure PO is restricted to act on the insulator body 8 between the seal systems S1 and S2. Since this external pressure PO has no axial force component applied to the insulator body, the resulting load on the insulator body 8 is strictly compression, which is applied in radial direction between the seal systems S1, S2.

A passage 16 through the insulator body 8 connects the first end face 10 with the second end face 11 of the insulator body. The through passage 16 leads internal pressure PI to the second end face 11. In consequence, the axial force components in the internal pressure PI are acting on the insulator body in opposite directions, thus balancing each other, and the resulting axial load/differential pressure is zero (0).

In other words, the insulator body 8 is completely relieved from shear stress.

The insulator body 8 of the first embodiment is a one-piece plug in a material with no (or very limited) conductivity which is moulded about a set of conductors 2 arranged in concentric relation about a longitudinal axis C through the centre of the insulator body. Any electrically insulating and mouldable material, such as plastic or polymeric or ceramic material, can be used for forming the insulator body 8. Epoxy or other thermosetting resin can advantageously be used for forming the insulator body 8.

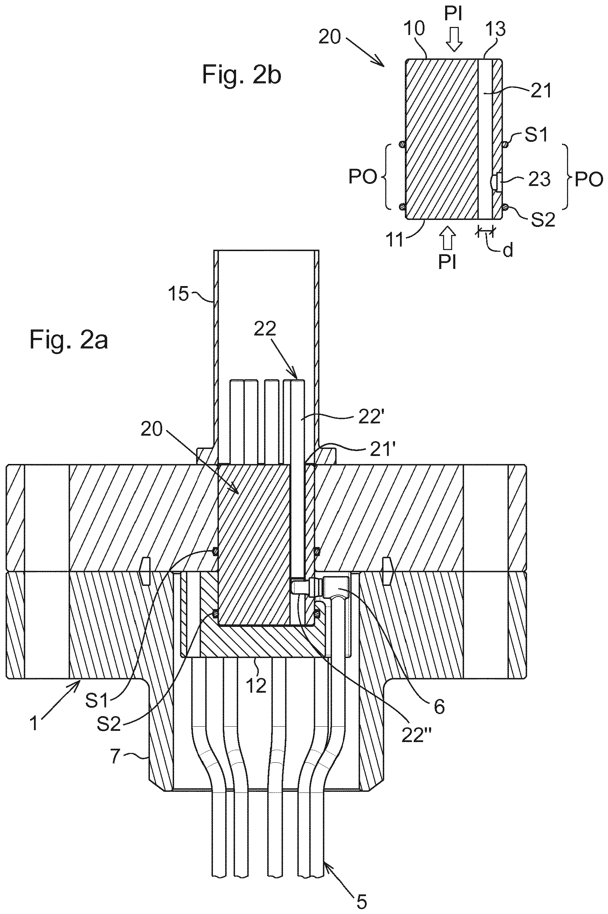

A second embodiment of the electrical penetrator assembly is illustrated in Fig. 2. The embodiment of Fig. 2 differs from the first embodiment with respect to the realization of the insulator and conductors. The insulator of the second embodiment comprises a body 20 having a set of longitudinal bores 21 for accommodation of a corresponding number of conductors 22. A radial bore 23, respectively, intersects the axial bores 21. The radial bores 23 exit in the side face of the insulator body between sealing systems S1 and S2.

Each conductor 22 comprises an axial conductor member 22' and a radial conductor member 22". The conductor members are interconnected electrically inside the insulator body 20.

An inner diameter of the axial bore 21 is slightly larger than an outer diameter of the axial conductor member 22', such that the axial conductor member 22' is accommodated with a clearance 21' to the inner wall of the axial bore 21.

As in the first embodiment, the external pressure PO is restricted to act on the insulator body 20 exclusively between the seals S1 and S2. Internal pressure PI is routed via the clearance in each axial bore 21 to act equally on the first and second end faces 10 and 11 respectively, thus balancing the forces to eliminate axial load on the insulator body 20.

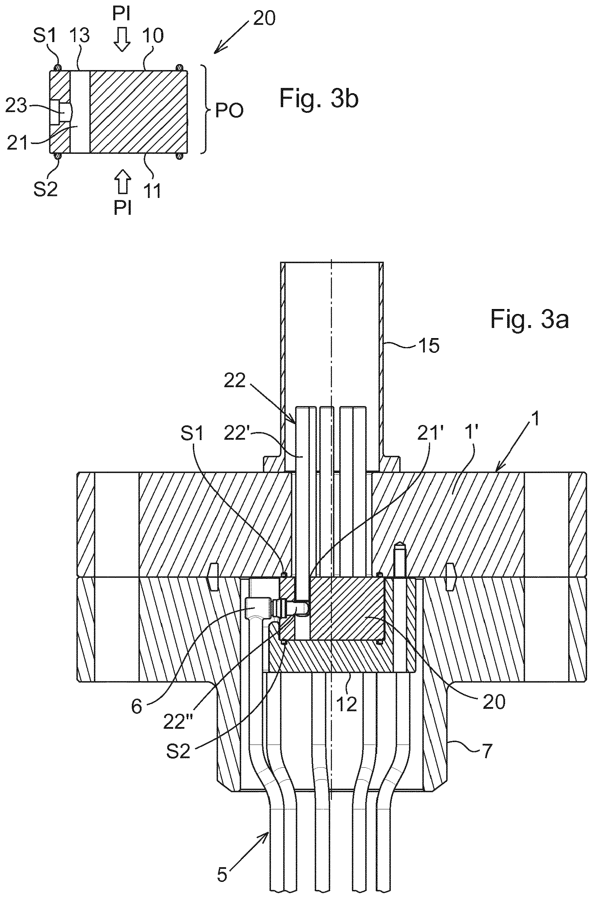

A third embodiment of the electrical penetrator assembly is illustrated in Fig. 3. The embodiment of Fig. 3 differs from the embodiment of Fig. 2 with respect to the arrangement of the insulator body 20 in the penetrator housing. More particularly, in the embodiment of Fig. 3 the insulator body 20 is axially secured between the seat 12 and housing component 1', by engagement from a section of housing component 1' which bears on the first end face 10 of the insulator body. Similar to previous embodiments, the second end face 11 is accommodated in the seat 12.

In this third embodiment, the sealing systems S1 and S2 are arranged at the end faces 10, 11 for sealing against the penetrator housing. These seals S1 and S2 of the third embodiment can be realized as rings, biased in the axial direction.

As in the first and second embodiments, the external pressure PO is restricted to act on the insulator body 20 exclusively between the seals S1 and S2. Internal pressure PI is routed via the clearance in the axial bores 21 to act equally on the first and second end faces 10 and 11 respectively, thus balancing the forces to eliminate axial load on the insulator body 20.

The insulator body of the second and third embodiments can be pressed to shape in a suitable ceramic composition, such as aluminium oxide or other ceramic material with sufficient dielectric capacity and compression strength. In order to complete the barrier between the inside and outside environments, the radial conductor member 22" is braced to the ceramic insulator body at the laterally facing opening of the radial bore 23.

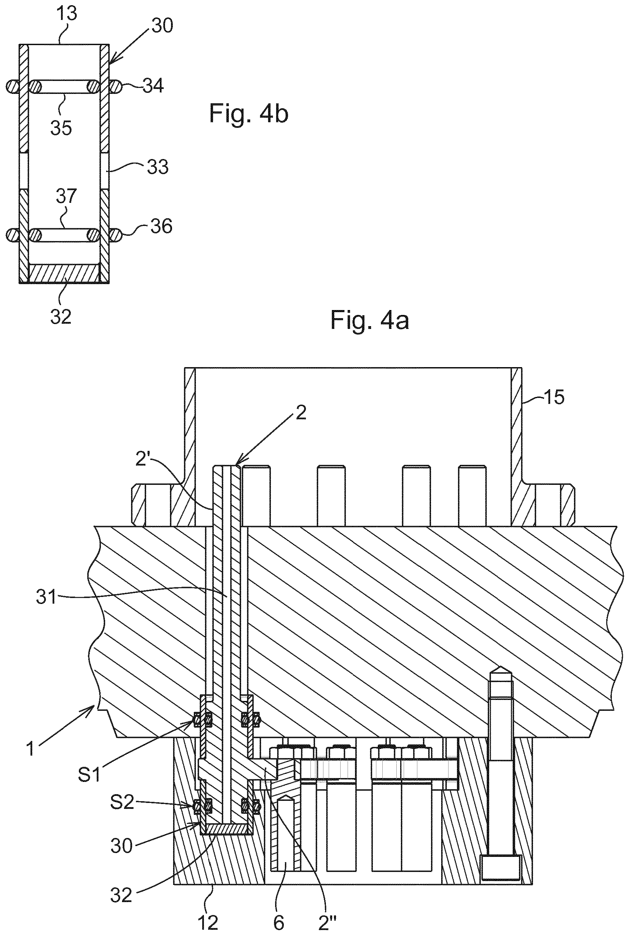

Fig. 4 illustrates a fourth embodiment of the electrical penetrator. The embodiment of Fig. 4 comprises a conductor 2 including an axial conductor member 2' adjoining a radial conductor member 2". The axial conductor member 2' is accommodated in a tube-shaped insulator body 30 forming a sleeve around a portion of the axial conductor member 2'. A longitudinal bore 31 through the axial conductor member 2' leads internal pressure PI to the second end of the conductor member 2'. An insulator disc 32 is inserted in the seat 12.

In correspondence with the previous embodiments, the radial conductor member 2" exits the insulator body 30 via a laterally facing opening 33 between sealing systems S1 and S2, respectively. More particularly, sealing system S1 comprises an outer sealing ring 34 sealing between the outside of the sleeve-shaped insulator body 30 and the penetrator housing, and an inner sealing ring 35 sealing between the inside of the insulator sleeve and the axial conductor member 2'. In corresponding way, the sealing system S2 comprises an outer sealing ring 36 and an inner sealing ring 37 respectively.

As in the previous embodiments, the external pressure PO is restricted to act on the insulator sleeve 30 exclusively between the sealing systems S1 and S2. Internal pressure PI is routed via the through bore 31 to act equally on the first and second faces of the axial conductor member 2', thus balancing the forces to eliminate axial load.

It will be appreciated that the fourth embodiment allows using ceramic materials in the insulator sleeve 30 without braced or moulded contact between the insulator and the conductor.

## Claims

1. An electrical penetrator assembly for conducting electrical power to an electrical appliance that is shielded from the external environment with an external pressure (PO) by a housing with an internal pressure (PI), the penetrator assembly comprising:
a penetrator housing (1),
at least one conductor (2; 22),
an insulator body (8; 20; 30) surrounding the conductor, wherein the insulator body (8, 20, 30) is tubular and comprises a side face (9) which extends axially from a first end face (10) to a second end face (11), wherein the conductor passes through the insulator body from an axially facing opening (13) in the first end face (10) of the insulator body to a laterally facing opening (14; 23; 33) in the side face (9) of the insulator body, wherein the insulator body (8, 20, 30) is provided with seal systems (S1, S2) sealing between the insulator body (8, 20, 30) and the penetrator housing (1),
**characterized in that** the laterally facing opening (14, 23, 33) is located in a section of the insulator body (8, 20, 30) delimited by the seal systems (S1; S2) towards the penetrator housing on each side of the lateral facing opening (14, 23, 33),
and **in that** an open passage (16) through the insulator body (8) connects the first end face (10) of the insulator body with the second end face (11) of the insulator body, the open passage (16) being arranged to lead the internal pressure (PI) to the second end face (11).

2. The penetrator assembly of claim 1, wherein the insulator body (8) is moulded about the at least one conductor (2) being formed with an axial conductor member (2') adjoining a radial conductor member (2").

3. The penetrator assembly of claim 1 or 2, wherein a plurality of conductors (2; 22) is arranged about a longitudinal axis (C) of the insulator body.

4. The penetrator assembly of any previous claim, wherein an axial bore (21) passes through the insulator body with a bore diameter (d) that provides clearance (21') about the axial conductor member (22') when seated in the bore (21).

5. The penetrator assembly of any previous claim, wherein the conductor (2) comprises an axial conductor member (2'), a radial conductor member (2") which adjoins the axial conductor member, and wherein the axial conductor member further comprises an axial through bore (31).

6. The penetrator assembly of claim 1 or 2, wherein the insulator body (20) comprises an axial bore (21) for an axial conductor member (22'), the axial bore being intersected by a radial bore (23) for a radial conductor member (22") which is connectable to an inner end of the axial conductor member inside the insulator body.

7. The penetrator assembly of any previous claim, wherein the radial conductor member (22") is brazed to the outside of the insulator body (20) between seals (S1; S2).

8. The penetrator assembly of any previous claim, wherein the radial conductor member (2"; 22") is angled from the axial conductor member (2'; 22') to point at from about 60° to about 90° from the direction of the axial conductor member.

9. The penetrator assembly of any previous claim, wherein the seal systems (S1, S2) comprise an outer seal assembly (34; 36) sealing between the insulator body (30) and the penetrator housing (1), and an inner seal assembly (35; 37) sealing between the insulator body (30) and the axial conductor member (2'), wherein outer and inner seal assemblies are arranged on each side of the radial conductor member.

10. The penetrator assembly of any previous claim, wherein the insulator body (8, 20, 30) is made by moulded epoxy or a ceramic element.

11. The penetrator assembly of any previous claim, wherein the second end (11) of the insulator body is accommodated in a seat (12) formed in the penetrator housing.

12. The penetrator assembly of claim 11, wherein an insulator disc (32) is arranged in the seat (12).

## Patentansprüche

1. Elektrische Eindringkörperanordnung zum Leiten elektrischer Leistung an ein elektrisches Gerät, das von der äußeren Umgebung mit einem äußeren Druck (PO) durch ein Gehäuse mit einem Innendruck (PI) abgeschirmt wird, die Eindringkörperanordnung umfassend:
ein Eindringkörpergehäuse (1),
mindestens einen Leiter (2; 22),
einen den Leiter umgebenden Isolierkörper (8; 20; 30), wobei der Isolierkörper (8, 20, 30) rohrförmig ist und eine Seitenfläche (9) umfasst, die sich axial von einer ersten Stirnfläche (10) zu einer zweiten Stirnfläche (11) erstreckt, wobei der Leiter durch den Isolierkörper von einer axial zugewandten Öffnung (13) in der ersten Stirnfläche (10) des Isolierkörpers zu einer lateral zugewandten Öffnung (14; 23; 33) in der Seitenfläche (9) des Isolierkörpers verläuft, wobei der Isolierkörper (8, 20, 30) mit Dichtungssystemen (S1, S2), die zwischen dem Isolierkörper (8, 20, 30) und dem Eindringkörpergehäuse (1) abdichten, versehen ist, **dadurch gekennzeichnet, dass**
sich die lateral zugewandte Öffnung (14, 23, 33) in einem Abschnitt des Isolierkörpers (8, 20, 30) befindet, der durch die Dichtungssysteme (S1; S2) auf jeder Seite der lateral zugewandten Öffnung (14, 23, 33) zu dem Eindringkörpergehäuse hin abgegrenzt ist,
und dadurch, dass ein offener Durchgang (16) durch den Isolierkörper (8) die erste Stirnfläche (10) des Isolierkörpers mit der zweiten Stirnfläche (11) des Isolierkörpers verbindet, wobei der offene Durchgang (16) eingerichtet ist, um den Innendruck (PI) zu der zweiten Stirnfläche (11) zu führen.

2. Eindringkörperanordnung nach Anspruch 1, wobei der Isolierkörper (8) um den mindestens einen Leiter (2) geformt ist, der mit einem axialen Leiterelement (2') ausgebildet ist, das an ein Radialleiterelement (2") angrenzt.

3. Eindringkörperanordnung nach Anspruch 1 oder 2, wobei eine Vielzahl von Leitern (2; 22) um eine Längsachse (C) des Isolierkörpers eingerichtet ist.

4. Eindringkörperanordnung nach einem der vorstehenden Ansprüche, wobei eine axiale Bohrung (21) durch den Isolierkörper mit einem Bohrungsdurchmesser (d) verläuft, der einen Freiraum (21') um das axiale Leiterelement (22') bereitstellt, wenn es in der Bohrung (21) sitzt.

5. Eindringkörperanordnung nach einem der vorstehenden Ansprüche, wobei der Leiter (2) ein axiales Leiterelement (2'), ein Radialleiterelement (2") umfasst, das an das axiale Leiterelement angrenzt, und wobei das axiale Leiterelement ferner eine axiale Durchgangsbohrung (31) umfasst.

6. Eindringkörperanordnung nach Anspruch 1 oder 2, wobei der Isolierkörper (20) eine axiale Bohrung (21) für ein axiales Leiterelement (22') umfasst, wobei die axiale Bohrung von einer radialen Bohrung (23) für ein Radialleiterelement (22") geschnitten wird, das mit einem inneren Ende des axialen Leiterelements innerhalb des Isolierkörpers verbindbar ist.

7. Eindringkörperanordnung nach einem der vorstehenden Ansprüche, wobei das Radialleiterelement (22") an die Außenseite des Isolierkörpers (20) zwischen den Dichtungen (S1; S2) gelötet ist.

8. Eindringkörperanordnung nach einem der vorstehenden Ansprüche, wobei das Radialleiterelement (2"; 22") von dem axialen Leiterelement (2'; 22') in einem Winkel absteht, um auf von etwa 60° bis etwa 90° von der Richtung des axialen Leiterelements zu zeigen.

9. Eindringkörperanordnung nach einem der vorstehenden Ansprüche, wobei die Dichtungssysteme (S1, S2) eine äußere Dichtungsanordnung (34; 36), die zwischen dem Isolierkörper (30) und dem Eindringkörpergehäuse (1) abdichtet, und eine innere Dichtungsanordnung (35; 37), die zwischen dem Isolierkörper (30) und dem axialen Leiterelement (2') abdichtet, umfassen, wobei die äußere und die innere Dichtungsanordnung auf jeder Seite des Radialleiterelements eingerichtet sind.

10. Eindringkörperanordnung nach einem der vorstehenden Ansprüche, wobei der Isolierkörper (8, 20, 30) durch geformtes Epoxid oder ein Keramikteil hergestellt wird.

11. Eindringkörperanordnung nach einem der vorstehenden Ansprüche, wobei das zweite Ende (11) des Isolierkörpers in einem in dem Eindringkörpergehäuse ausgebildeten Sitz (12) eingesetzt ist.

12. Eindringkörperanordnung nach Anspruch 11, wobei eine Isolierscheibe (32) in dem Sitz (12) eingerichtet ist.

## Revendications

1. Ensemble pénétrateur électrique pour conduire une alimentation électrique à un appareil électrique qui est protégé de l'environnement externe avec une pression externe (PO) par un boîtier avec une pression interne (PI), l'ensemble pénétrateur comprenant :
un boîtier de pénétrateur (1),
au moins un conducteur (2 ; 22),
un corps d'isolateur (8 ; 20 ; 30) entourant le conducteur, dans lequel le corps d'isolateur (8, 20, 30) est tubulaire et comprend une face latérale (9) qui s'étend axialement depuis une première face d'extrémité (10) vers une seconde face d'extrémité (11), dans lequel le conducteur traverse le corps d'isolateur depuis une ouverture orientée axialement (13) dans la première face d'extrémité (10) du corps d'isolateur vers une ouverture orientée latéralement (14 ; 23 ; 33) dans la face latérale (9) du corps d'isolateur, dans lequel le corps d'isolateur (8, 20, 30) est pourvu de systèmes d'étanchéité (S1, S2) assurant l'étanchéité entre le corps d'isolateur (8, 20, 30) et le boîtier de pénétrateur (1), **caractérisé en ce que**
l'ouverture orientée latéralement (14, 23, 33) est située dans une section du corps d'isolateur (8, 20, 30) délimitée par les systèmes d'étanchéité (S1 ; S2) vis-à-vis du boîtier de pénétrateur de chaque côté de l'ouverture orientée latéralement (14, 23, 33),
et **en ce qu'**un passage ouvert (16) à travers le corps d'isolateur (8) relie la première face d'extrémité (10) du corps d'isolateur à la seconde face d'extrémité (11) du corps d'isolateur, le passage ouvert (16) étant agencé pour diriger la pression interne (PI) vers la seconde face d'extrémité (11).

2. Ensemble pénétrateur selon la revendication 1, dans lequel le corps d'isolateur (8) est moulé autour de l'au moins un conducteur (2) étant formé avec un élément conducteur axial (2') adjacent à un élément conducteur radial (2").

3. Ensemble pénétrateur selon la revendication 1 ou 2, dans lequel une pluralité de conducteurs (2 ; 22) est agencée autour d'un axe longitudinal (C) du corps d'isolateur.

4. Ensemble pénétrateur selon l'une quelconque des revendications précédentes, dans lequel un alésage axial (21) traverse le corps d'isolateur avec un diamètre d'alésage (d) qui assure un dégagement (21') autour de l'élément conducteur axial (22') lorsqu'il est logé dans l'alésage (21).

5. Ensemble pénétrateur selon l'une quelconque des revendications précédentes, dans lequel le conducteur (2) comprend un élément conducteur axial (2'), un élément conducteur radial (2") qui est adjacent à l'élément conducteur axial, et dans lequel l'élément conducteur axial comprend en outre un alésage traversant axial (31).

6. Ensemble pénétrateur selon la revendication 1 ou 2, dans lequel le corps d'isolateur (20) comprend un alésage axial (21) pour un élément conducteur axial (22'), l'alésage axial étant coupé par un alésage radial (23) pour un élément conducteur radial (22") qui peut être relié à une extrémité interne de l'élément conducteur axial à l'intérieur du corps d'isolateur.

7. Ensemble pénétrateur selon l'une quelconque des revendications précédentes, dans lequel l'élément conducteur radial (22") est brasé à l'extérieur du corps d'isolateur (20) entre les joints (S1 ; S2).

8. Ensemble pénétrateur selon l'une quelconque des revendications précédentes, dans lequel l'élément conducteur radial (2" ; 22") est incliné depuis l'élément conducteur axial (2' ; 22') pour être orienté à environ 60° à environ 90° par rapport à la direction de l'élément conducteur axial.

9. Ensemble pénétrateur selon l'une quelconque des revendications précédentes, dans lequel les systèmes d'étanchéité (S1, S2) comprennent un ensemble d'étanchéité externe (34 ; 36) assurant l'étanchéité entre le corps d'isolateur (30) et le boîtier de pénétrateur (1), et un ensemble d'étanchéité interne (35 ; 37) assurant l'étanchéité entre le corps d'isolateur (30) et l'élément conducteur axial (2'), dans lequel les ensembles d'étanchéité externe et interne sont agencés de chaque côté de l'élément conducteur radial.

10. Ensemble pénétrateur selon l'une quelconque des revendications précédentes, dans lequel le corps d'isolateur (8, 20, 30) est constitué d'époxy moulé ou d'un élément céramique.

11. Ensemble pénétrateur selon l'une quelconque des revendications précédentes, dans lequel la seconde extrémité (11) du corps d'isolateur est logée dans une assise (12) formée dans le boîtier de pénétrateur.

12. Ensemble pénétrateur selon la revendication 11, dans lequel un disque d'isolateur (32) est agencé dans l'assise (12).
